# DEMANDE DE BREVET EUROPEEN

(11) **EP 2 651 093 A1**
(43) Date de publication de la demande: **16.10.2013**
(21) Numéro de dépôt: 12305444.7
(22) Date de dépôt: 13.04.2012
(51) Int. Cl.: H04L 29/06, H04W 12/08

(54) **Procédé d'appairage d'un élément de sécurité à un terminal de télécommunications et système correspondant**

(71) Demandeur: Gemalto SA, 92190 Meudon (FR)
(72) Inventeur: Amiel, Patrice, 13705 La Ciotat (FR); Berard, Xavier, 13705 La Ciotat (FR); Valles, Grégory, 13705 La Ciotat (FR); Fine, Jean-Yves, 13705 La Ciotat (FR)

(57) **Abrégé**

L'invention concerne notamment un procédé d'appairage d'un élément de sécurité (40) à un terminal de télécommunications (41) dans un réseau de télécommunications (42), l'élément de sécurité (40) étant amovible du terminal de télécommunications (41).

Selon l'invention, le procédé consiste à :
- transmettre de l'élément de sécurité (40) au terminal de télécommunications (41) un identifiant de l'élément de sécurité (40) à l'occurrence d'un événement (46) ;
- transmettre du terminal de télécommunications (41), via le réseau de télécommunications (42), l'identifiant de l'élément de sécurité (40) et un identifiant de l'abonnement utilisateur correspondant au terminal de télécommunications (41) dans lequel est inséré l'élément de sécurité (40) à un élément (43) coopérant avec le réseau de télécommunications (42) ;
- associer dans un élément (44) coopérant avec le réseau de télécommunications (42), l'identifiant de l'élément de sécurité (40) et l'identifiant de l'abonnement utilisateur correspondant au terminal de télécommunications (41) dans lequel l'élément de sécurité (40) est inséré, afin que l'élément (43) coopérant avec le réseau de télécommunications (42) puisse adresser l'élément de sécurité (40) via le terminal de télécommunications (41).

## Description

Le domaine de l'invention est celui des télécommunications dans des réseaux de type 3G ou IMS (IP Multimedia Subsystem).

Plus précisément la présente invention concerne un procédé et un système d'appairage d'un élément de sécurité à un terminal de télécommunications dans un réseau de télécommunications, l'élément de sécurité étant amovible du terminal de télécommunications.

On entend dans la suite de cette description par élément de sécurité amovible une carte, par exemple de format SD ou micro-SD, pouvant être extraite est insérée dans un terminal de télécommunications, tel qu'un téléphone mobile ou un micro-ordinateur.

L'invention s'applique notamment aux éléments de sécurité comprenant des fonctionnalités de paiement, par exemple de type NFC.

Un déploiement rapide de paiement par liaison NFC à l'aide de terminaux mobiles et notamment de téléphones mobiles suppose que de nombreux téléphones mobiles soient équipés de fonctionnalités NFC. Or de tels types de téléphones mobiles ne font qu'apparaître sur le marché et les téléphones mobiles non compatibles NFC ne peuvent réaliser ce type de paiement. À cet effet, il a été proposé de pourvoir des éléments de sécurité avec des fonctionnalités NFC. Ces éléments de sécurité se présentent par exemple sous la forme de cartes SD ou micro-SD pouvant être insérées et extraites de terminaux de télécommunications (de nombreux terminaux comprennent des lecteurs de cartes SD ou micro-SD). Un téléphone mobile non compatible NFC peut ainsi, grâce aux fonctionnalités NFC embarquées dans la carte qui y est insérée, se comporter de la même manière qu'un téléphone mobile pourvu de par sa conception d'une fonctionnalité NFC.

Le téléphone mobile comporte par ailleurs, classiquement, une carte SIM, un UICC ou un e-UICC (circuit soudé remplissant la même fonction qu'un UICC). Cette fonctionnalité SIM ou UICC est liée à l'abonnement de l'utilisateur.

Un élément de sécurité doit pouvoir être administré à distance par l'opérateur auprès duquel l'utilisateur a souscrit son abonnement. Cette administration peut consister en des mises à jour, des vérifications, etc, par exemple réalisées via OTA. Or un tel élément de sécurité n'a pas d'adresse et l'opérateur administre l'élément de sécurité en s'adressant au terminal mobile, par exemple grâce à son IMPU dans un réseau IMS ou à son MSISDN dans un réseau 3G.

Un réseau IMS est un réseau IP connecté à un réseau d'accès, par exemple 3G ou LTE (Long Term Evolution). Le réseau IMS fournit une combinaison dynamique de transport de voix, vidéo, messages, données, etc. pendant la même session. L'IMS utilise le protocole SIP (Session Initiation Protocol) pour établir et contrôler des communications ou des sessions entre des terminaux d'usagers (appelés points terminaux) ou entre des points terminaux et des serveurs d'application. SIP permet à un appelant d'établir une session par commutation de paquets avec une personne appelée (en utilisant SIP User Agents, UAS, installés dans les points terminaux), même si l'appelant ne connaît pas l'adresse IP courante de l'appelé avant d'initier l'appel.

Les spécifications 3GPP IMS actuelles demandent l'utilisation d'une procédure d'authentification des utilisateurs vers le réseau IMS. Cette procédure est décrite dans 3GPP TS 24.229 et 33.203. En utilisant cette approche, une identité de l'utilisateur privé (IMPI) et une ou plusieurs identités publiques des utilisateurs (IMPU) sont alloués à l'utilisateur par l'opérateur. Afin de participer à des sessions multimédia, l'utilisateur doit enregistrer au moins un IMPU sur le réseau. Les identités sont ensuite utilisées par le réseau pour identifier l'utilisateur lors de l'enregistrement et la procédure d'authentification (l'IMPI est utilisé pour localiser les renseignements sur les abonnés, comme les informations d'authentification utilisateur, tandis que le modèle d'imputation précise l'identité d'utilisateur avec lequel l'utilisateur souhaite interagir, et à laquelle des services spécifiques doivent être attachés). L'IMPI et les IMPU sont stockés dans une application appelée IMS Subscriber Identity Module (ISIM) stockée sur une carte à circuit intégré (UICC) dans le terminal de l'utilisateur.

Chaque IMPU est associé à un soi-disant profil de service. Le profil de service est un ensemble de services et de données connexes, qui comprend, entre autres, les critères de filtrage initial qui fournissent une logique de service simple pour l'utilisateur (par exemple, il définit un ensemble de services IMS que l'identité publique IMPU pourra utiliser).

Le réseau d'accès au réseau IMS est par exemple un réseau UMTS, LTE, WLAN et/ou Internet.

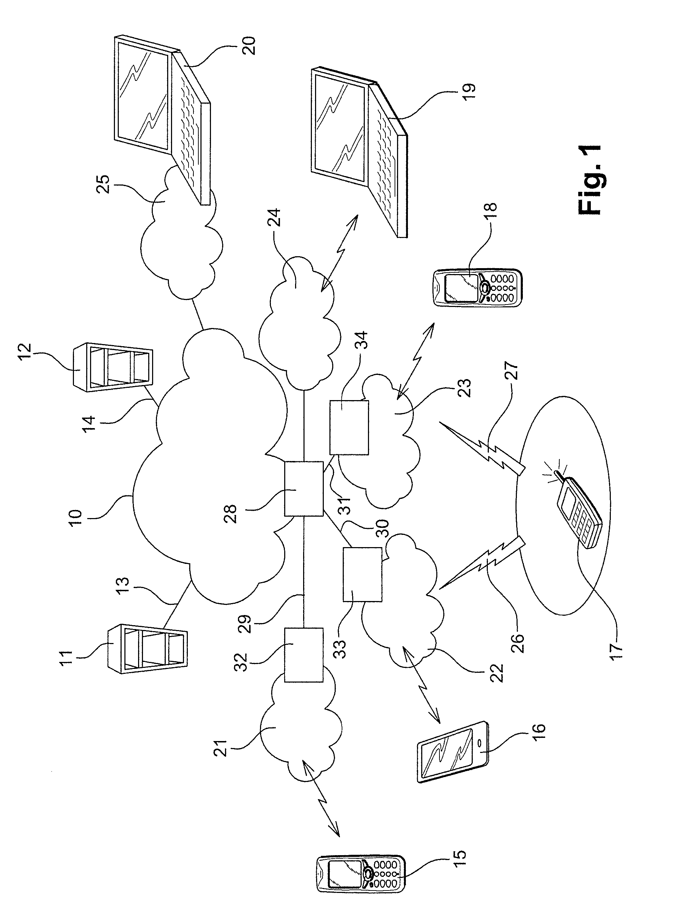

La figure 1 représente un tel réseau IMS connecté à différents réseaux d'accès.

Un réseau IMS 10, tel que défini par 3GPP TS 23.228, est connecté à des serveurs d'application 11, 12 par des liaisons SIP 13, 14. Les serveurs 11 et 12 hébergent des applications IMS représentant des services tels que de la messagerie instantanée, du management de présence (utilisateur présent, absent, en réunion,...), du filtrage d'appel et des sessions temps réel tel que de la voix sur IP (VoIP), de la visioconférence, de la vidéo à la demande, du partage de vidéos, des jeux en réseau ou de télévision via IP.

Des utilisateurs de points terminaux 15 à 20 accèdent à ces services du réseau IMS par l'intermédiaire de réseaux d'accès, tel qu'un réseau UMTS 21, un réseau LTE 22, un réseau 3GPP2 23, un réseau WLAN 24 ou un réseau Internet 25. Le terminal 17 communique par une liaison sans fil 26 avec le réseau LTE 22 et une liaison EV-DO 27 avec le réseau 3GPP2 23.

Le réseau IMS comporte un proxy 28 relié par des liaisons SIP 29 à 31 à des passerelles d'interconnexion, tel qu'une passerelle GGSN (Gateway GPRS Support Node) 32 notamment chargée de fournir une adresse IP au point terminal 15 constitué par un terminal GPRS pendant toute la durée de sa connexion au réseau IMS, une passerelle PDN GW (Packet Data Network Gateway) 33 assurant le même service pour les terminaux LTE 16 et 17, et une passerelle PDSN (Packet Data Serving Node) 34 assurant une connexion via le réseau 3GPP2 23 du terminal 18 de type CDMA 2000.

L'accès aux services du réseau IMS 10 par les utilisateurs des points terminaux 15 à 20 est obtenu après que ces utilisateurs se soient connectés à leurs réseaux d'accès et aient demandé une connexion IP vers ce réseau IMS 10. Les points terminaux peuvent également communiquer entre eux par l'intermédiaire du réseau IMS, par exemple parVolP.

L'authentification des points terminaux par le réseau IMS 10 est obtenue grâce à une identité privée IMPI, généralement comprise dans une application USIM ou ISIM embarquée dans les points terminaux 15 à 20. Chaque point terminal possède sa propre identité privée. Au cours de la demande d'accès au réseau IMS 10, un point terminal envoie son IMPI au réseau 10 et, s'il y est authentifié (dans un serveur d'enregistrement appelé HSS), des droits d'accès lui sont accordés en fonction de son profil et de son abonnement. Le réseau IMS procède notamment à la facturation de l'utilisateur et au contrôle de la session.

Chaque point terminal 15 à 20 renferme également au moins une adresse publique (donc non secrète) IMPU qui permet à son utilisateur de requérir et recevoir des communications avec d'autres utilisateurs ou d'accéder à un service. Les IMPU se présentent sous la forme d'un SIP URI (Unified Resource Identifier) tel que défini dans les recommandations IETF RFC 3261 et IETF RFC 2396. A titre d'exemple, une adresse IMPU pourrait se présenter sous la forme :
sip : martin@gemalto.com
ou alors sous la forme d'un numéro de téléphone :
sip : 0123456789@gemalto.ims.com.

A contrario, le format d'une adresse privée IMPI est du type :
<xyz>@gemalto.com
avec <xyz> étant une chaîne de caractères quelconques, le format d'un IMPI étant dit Network Access Identifier tel que décrit dans la recommandation IETF RFC 2486.

Les IMPU et l'IMPI sont classiquement stockés dans l'application ISIM d'un point terminal. Le point terminal peut comporter un logiciel qui peut enregistrer des IMPU ou alors il est laissé à son utilisateur le droit d'enregistrer des IMPU.

Si le point terminal ne comporte pas d'application ISIM ou USIM, les IMPU et l'IMPI sont stockés dans une mémoire du point terminal. Dans un mode de réalisation classique, l'ISIM est stockée dans un élément sécurisé, par exemple sur une carte à puce UICC extractible du point terminal. Une carte UICC peut porter une ou plusieurs applications ISIM ou USIM. L'élément sécurisé peut également faire partie intégrante du point terminal.

Après ou pendant l'authentification d'un point terminal par reconnaissance de son IMPI et de la vérification des secrets dont il dispose, le point terminal envoie une de ses adresses IMPU au HSS du réseau IMS 10 afin de s'y enregistrer et de bénéficier d'un service IMS.

Le problème posé par un élément de sécurité amovible tel que mentionné précédemment est que celui-ci peut être inséré dans un autre terminal ayant donc un IMPU (dans le cas d'un réseau IMS) ou un MSISDN (dans un réseau 3G) différent de celui enregistré par l'opérateur. L'opérateur ne pourra alors plus s'adresser à l'élément de sécurité car le terminal le comprenant correspond à un autre abonnement (IMPU ou MSISDN différent). Il en est de même si une autre carte SIM ou UICC est insérée dans le terminal comprenant cet élément de sécurité.

L'élément de sécurité est dans les deux cas non administrable par l'opérateur ou par une plate-forme OTA apte à gérer cet élément de sécurité.

La présente invention propose de pouvoir administrer un élément de sécurité extractible d'un terminal même si cet élément de sécurité a été inséré dans un autre terminal ou si la carte SIM ou UICC de ce terminal a été remplacée par une autre correspondant à un autre abonnement.

La seule solution existante à ce jour consiste à contacter l'opérateur (envoi d'e-mail, de SMS, ou appeler l'opérateur) pour lui signaler que l'élément de sécurité est maintenant accessible par l'intermédiaire d'un autre abonnement. Cette solution nécessite cependant une action manuelle de la part de l'utilisateur et si elle n'est pas réalisée, par négligence ou oubli, l'opérateur ne sera plus en mesure d'administrer l'élément de sécurité.

La présente invention a pour objectif de remédier à cet inconvénient.

À cet effet, la présente invention propose un procédé d'appairage d'un élément de sécurité à un terminal de télécommunications dans un réseau de télécommunications, l'élément de sécurité étant amovible du terminal de télécommunications, ce procédé consistant à :
- transmettre de l'élément de sécurité au terminal de télécommunications un identifiant de l'élément de sécurité à l'occurrence d'un événement ;
- transmettre du terminal de télécommunications, via le réseau de télécommunications, l'identifiant de l'élément de sécurité et un identifiant de l'abonnement utilisateur correspondant au terminal de télécommunications dans lequel est inséré l'élément de sécurité à un élément coopérant avec le réseau de télécommunications ;
- associer dans un élément coopérant avec le réseau de télécommunications, l'identifiant de l'élément de sécurité et l'identifiant de l'abonnement utilisateur correspondant au terminal de télécommunications dans lequel l'élément de sécurité est inséré, afin que l'élément coopérant avec le réseau de télécommunications puisse adresser l'élément de sécurité via le terminal de télécommunications.

Avantageusement, le procédé selon l'invention consiste également à transmettre de l'élément de sécurité au terminal de télécommunications les IARIs des applications portées par l'élément de sécurité, les IARIs étant transmis à l'élément coopérant avec le réseau de télécommunications.

Dans un mode de mise en oeuvre préférentiel, l'élément de sécurité est une carte de type SD ou micro-SD.

L'élément de sécurité comprend avantageusement une application de paiement de type NFC.

L'identifiant de l'abonnement utilisateur correspondant au terminal de télécommunications dans lequel l'élément de sécurité est inséré est préférentiellement son MSISDN.

Dans un autre mode de mise en oeuvre, l'identifiant de l'abonnement utilisateur correspondant au terminal de télécommunications dans lequel l'élément de sécurité est inséré est son IMPU.

De préférence, l'identifiant de l'élément de sécurité et l'identifiant de l'abonnement utilisateur correspondant au terminal de télécommunications dans lequel est inséré l'élément de sécurité sont stockés dans une plate-forme OTA.

L'invention concerne également un système d'appairage d'un élément de sécurité à un terminal de télécommunications dans un réseau de télécommunications, l'élément de sécurité étant amovible du terminal de télécommunications, ce système comprenant :
- des moyens pour transmettre de l'élément de sécurité au terminal de télécommunications un identifiant de l'élément de sécurité à l'occurrence d'un événement ;
- des moyens pour transmettre du terminal de télécommunications, via le réseau de télécommunications, l'identifiant de l'élément de sécurité et un identifiant de l'abonnement utilisateur correspondant au terminal de télécommunications dans lequel est inséré l'élément de sécurité à un élément coopérant avec le réseau de télécommunications ;
- des moyens pour associer dans un élément coopérant avec le réseau de télécommunications, l'identifiant de l'élément de sécurité et l'identifiant de l'abonnement utilisateur correspondant au terminal de télécommunications dans lequel l'élément de sécurité est inséré, afin que l'élément coopérant avec le réseau de télécommunications puisse adresser l'élément de sécurité via le terminal de télécommunications.

D'autres caractéristiques et avantages de l'invention apparaîtront à la lecture de la description suivante d'un mode de mise en oeuvre préférentiel, donné à titre illustratif et non limitatif, et des dessins annexés dans lesquels :
- la figure 1 représente un réseau IMS connecté à différents réseaux d'accès ;
- la figure 2 représente un système conforme à la présente invention ;
- la figure 3 représente un procédé conforme à la présente invention mis en oeuvre dans un réseau de type IMS.

La figure 1 a été décrite précédemment en référence à l'état de la technique.

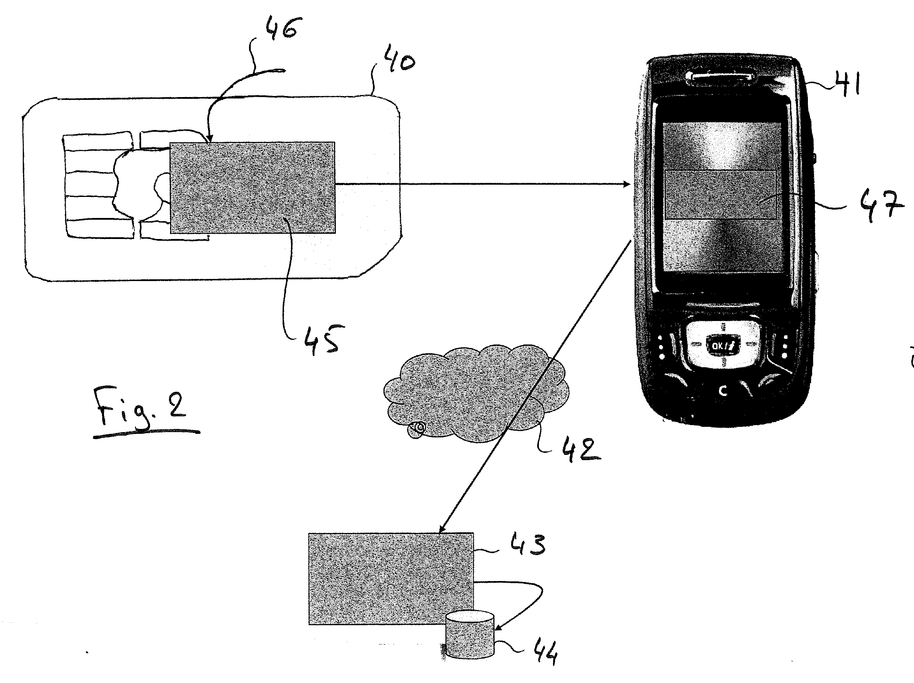

La figure 2 représente un système conforme à la présente invention.

Un élément de sécurité 40, par exemple de format SD ou micro-SD, est destiné à être inséré dans un terminal de télécommunication 41, ici constitué par un téléphone mobile. Le terminal 41 est apte à communiquer via un réseau de télécommunications 42 avec un élément 43 du réseau 42 ou connecté à celui-ci, grâce à une carte SIM ou UICC, voire e-UICC qu'il renferme. Dans le cas d'un réseau de type CDMA, cette carte est de type R-UIM.

L'élément 43 est typiquement un serveur OTA apte à transférer des données à l'élément de sécurité 40.

L'élément de sécurité 40 comporte par exemple une application NFC permettant d'effectuer des paiements auprès de commerçants ou d'échanger des données entre deux terminaux aptes à communiquer en NFC. Il comprend également un élément 45 permettant de transmettre sur commande 46 un identifiant de l'élément de sécurité 40. Cet identifiant est unique pour l'élément de sécurité 40, c'est-à-dire que pour chaque élément de sécurité 40 un identifiant unique lui est associé (par exemple un ICCID, c'est-à-dire un numéro de série). Ceci permet d'identifier de manière univoque chaque élément de sécurité 40.

La commande 46 peut être la mise sous tension du terminal 41 ou la détection de l'insertion de l'élément de sécurité 40 dans le terminal 41 (si ce dernier est déjà sous tension et en mode de fonctionnement - avant ou après avoir à entré le code PIN sur le clavier du terminal 41). L'identité de l'élément sécurisé 40 est ainsi transmise au terminal 41.

Le terminal 41 comporte dans un réseau 3G un identifiant appelé MSISDN (Mobile Station ISDN Number) qui est le numéro « connu du public » de l'usager GSM ou UMTS par opposition au numéro IMSI. C'est cet identifiant, couramment appelé numéro de téléphone, qui sera composé afin d'atteindre l'abonné. Seul le HLR connaît la correspondance entre le MSISDN et l'IMSI.

Dans un réseau IMS (réseau de télécommunication proposant des services basés sur IP, au-dessus et indépendamment du réseau d'accès utilisé (3G, LTE), capable de fournir une adresse IP et la maintenir pour des utilisateurs mobiles), l'identifiant du terminal 41 est appelé IMPU. Plus précisément, l'invention s'applique à un réseau IMS permettant la mise en place de services au dessus d'un réseau d'accès IP (LTE) ou 3G.

Le terminal 41 comprend, selon l'invention, un programme 47 (par exemple une applet) apte à recevoir l'identité de l'élément sécurisé 40 et de transmettre cette identité, accompagnée par un identifiant de l'abonnement utilisateur correspondant au terminal 41 dans lequel est inséré l'élément de sécurité 40. Cet identifiant est par exemple MSISDN dans le cas d'un réseau 3G et IMPU dans un réseau IMS.

La plate-forme ou serveur OTA 43 reçoit alors ces deux identités qui sont alors associées et enregistrées dans une base de données 44 faisant partie de cette plate-forme OTA 43.

La base de données 44 associe donc à chaque ICCID d'un élément de sécurité 10 un IMPU (ou un MSISDN) correspondant à l'abonnement utilisateur correspondant au terminal 41 dans lequel cet élément de sécurité 40 est inséré. Les éléments 43 et 44 sont ou non gérés par l'opérateur auprès duquel l'abonné aura souscrit un abonnement. L'opérateur de la plateforme OTA 43 peut ainsi communiquer avec l'élément de sécurité 40 par l'intermédiaire de l'identifiant de l'abonnement utilisateur correspondant au terminal 41 sans que l'utilisateur de ce terminal 41 n'ait notifié l'insertion de l'élément de sécurité 40 dans un autre terminal ou le remplacement de la carte SIM (UICC) par une autre dans le terminal comprenant cet élément de sécurité 40.

L'invention permet donc de contacter un élément de sécurité 40 quel que soit le terminal dans lequel il est inséré.

L'invention concerne également un système d'appairage d'un élément de sécurité 40 à un terminal de télécommunications 41 dans un réseau de télécommunications 42, l'élément de sécurité 40 étant amovible du terminal de télécommunications 41. Ce système comprend :
- des moyens 45 pour transmettre de l'élément de sécurité 40 au terminal de télécommunications 41 un identifiant de cet élément de sécurité 40 à l'occurrence d'un évènement 46 ;
- des moyens 47 pour transmettre du terminal de télécommunications 41, via le réseau de télécommunications 42, l'identifiant de l'élément de sécurité 40 et un identifiant de l'abonnement utilisateur correspondant au terminal de télécommunications 41 dans lequel est inséré l'élément de sécurité 40 à un élément 43 coopérant avec le réseau de télécommunications 42 ;
- des moyens pour associer dans un élément 44 coopérant avec le réseau de télécommunications 42, l'identifiant de l'élément de sécurité 40 et l'identifiant de l'abonnement utilisateur correspondant au terminal de télécommunications 41 dans lequel l'élément de sécurité 40 est inséré, afin que l'élément 43 coopérant avec le réseau de télécommunications 42 puisse adresser l'élément de sécurité 40 via le terminal de télécommunications 41.

Comme indiqué précédemment, l'invention peut être mise en oeuvre dans un réseau classique de type 3G ou dans un réseau IMS.

Dans un réseau 3G, la transmission des identifiants entre le terminal 41 et la plate-forme OTA 43 peut être réalisée à l'aide d'un SMS.

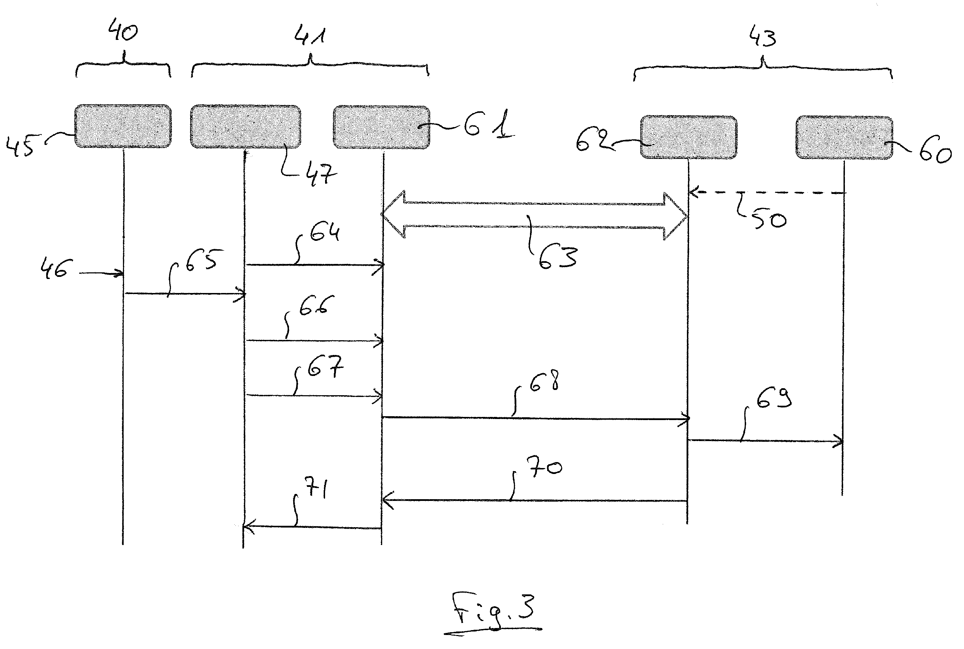

Dans un réseau de service IMS relié à un réseau LTE, entièrement IP, il n'existe pas de SMS. La figure 3 représente un procédé conforme à la présente invention mise en oeuvre dans un réseau de type IMS.

On retrouve dans la figure 3 les éléments précédemment décrits en référence à la figure 2 : l'élément de sécurité 40, le terminal 41 et la plate-forme OTA 43. L'élément de sécurité 40 comprend les moyens 45 pour transmettre de l'élément de sécurité 40 au terminal 41 un identifiant de cet élément de sécurité 40 à l'occurrence d'un évènement 46 (par exemple démarrage ou initialisation (boot) du terminal ou détection de l'insertion de l'élément de sécurité dans le terminal 41).

Lors d'une première étape 50, la plate-forme OTA 43 déclare par un serveur d'application 60 son adresse PSI qui peut être considérée comme un URL SIP (par exemple sip:service@operateur) ou un numéro de téléphone. Cette déclaration s'opère par l'intermédiaire du HSS de l'opérateur. Le groupe 3GPP a défini le PSI aux chapitres 4.3.6 et 5.4.12 du standard TS 23.228. Un agent SIP utilisateur 61 communique alors avec le S-CSCF 62 de la plateforme 43 pour lui transmettre son IMPU (et également son IMPI) pendant des échanges 63. Le terminal 41 est alors relié à la plate-forme OTA 43, gérée soit par l'opérateur du réseau auprès duquel l'abonné a souscrit un abonnement, soit par un administrateur OTA gérant l'application embarquée sur l'élément de sécurité 40 (établissement bancaire par exemple). Ces échanges permettent de pouvoir utiliser les services du domaine IMS, tels qu'établir une session multimédia ou recevoir une demande de session. Ils correspondent donc à l'enregistrement de l'usager au réseau IMS.

L'application 47 chargée au niveau du terminal 41 s'enregistre alors comme une application auprès de l'agent SIP 61 (étape 64). A l'occurrence de l'évènement 46, l'élément de sécurité 40 transmet son identifiant unique (étape 65) à l'application 47. Cette dernière génère alors un message (étape 66) indiquant à l'agent 61 qu'elle va lui transmettre son identifiant IMPU ainsi que l'identifiant de l'élément de sécurité 40, ce qu'elle réalise immédiatement après (étape 67). Les deux identifiants sont alors retransmis (étape 68) au S-CSCF 62 (Serving Call Session Control Function) qui le retransmet au serveur d'application 60 (étape 69). Une extraction de l'IMPU est alors réalisée et cet IMPU est associé à l'identifiant de l'élément de sécurité 40 dans la base de données 44 (fig.2). Des messages d'acquittement 70 et 71 sont alors envoyés à l'agent 61 et à l'application 47.

Le serveur d'application 60 compris dans la plate-forme OTA est alors à même de contacter l'élément de sécurité 40 grâce à la connaissance de l'IMPU correspondant à l'abonnement souscrit par l'abonné dans lequel est inséré l'élément de sécurité 40.

Lors des étapes 67 à 69, il est également possible de transmettre à la plateforme OTA 43 une liste des applications portées par l'élément de sécurité 40. Ces applications sont identifiées par leurs IARIs (IMS Application Reference Identifier), qui sont normalisés par l'IANA (Internet Assigned Numbers Authority). Ces IARIs sont précédemment transmis de l'élément de sécurité 40 au terminal 41 (lors de l'étape 65), par exemple en même temps que son identifiant.

De cette manière, le réseau de télécommunications (le serveur d'application 60) connaît les différentes applications portées par l'élément de sécurité, leur version, ... et peut les administrer à distance (mise à jour, ajoût, suppression d'une ou plusieurs applications,...).

## Revendications

1. Procédé d'appairage d'un élément de sécurité (40) à un terminal de télécommunications (41) dans un réseau de télécommunications (42), ledit élément de sécurité (40) étant amovible dudit terminal de télécommunications (41), **caractérisé en ce qu'**il consiste à :
- transmettre dudit élément de sécurité (40) audit terminal de télécommunications (41) un identifiant dudit élément de sécurité (40) à l'occurrence d'un événement (46) ;
- transmettre dudit terminal de télécommunications (41), via ledit réseau de télécommunications (42), ledit identifiant dudit élément de sécurité (40) et un identifiant de l'abonnement utilisateur correspondant audit terminal de télécommunications (41) dans lequel est inséré ledit élément de sécurité (40) à un élément (43) coopérant avec ledit réseau de télécommunications (42) ;
- associer dans un élément (44) coopérant avec ledit réseau de télécommunications (42), ledit identifiant dudit élément de sécurité (40) et ledit identifiant de l'abonnement utilisateur correspondant audit terminal de télécommunications (41) dans lequel ledit élément de sécurité (40) est inséré, afin que ledit élément (43) coopérant avec ledit réseau de télécommunications (42) puisse adresser ledit élément de sécurité (40) via ledit terminal de télécommunications (41).

2. Procédé selon la revendication 1, **caractérisé en ce qu'**il consiste également à transmettre dudit élément de sécurité (40) audit terminal de télécommunications (41) les IARIs des applications portées par ledit élément de sécurité (40), lesdits IARIs étant transmis audit élément (43) coopérant avec ledit réseau de télécommunications (42).

3. Procédé selon l'une des revendications 1 et 2, **caractérisé en ce que** ledit élément de sécurité (40) est une carte de type SD ou micro-SD.

4. Procédé selon l'une des revendications 1 à 3, **caractérisé en ce que** ledit élément de sécurité (40) comprend une application de paiement de type NFC.

5. Procédé selon l'une des revendications 1 à 4, **caractérisé en ce que** ledit identifiant de l'abonnement utilisateur correspondant audit terminal de télécommunications (41) dans lequel ledit élément de sécurité (40) est inséré est son MSISDN.

6. Procédé selon l'une des revendications 1 à 4, **caractérisé en ce que** ledit identifiant de l'abonnement utilisateur correspondant audit terminal de télécommunications (41) dans lequel ledit élément de sécurité (40) est inséré est son IMPU.

7. Procédé selon l'une des revendications 1 à 6, **caractérisé en ce que** ledit identifiant dudit élément de sécurité (40) et ledit identifiant de l'abonnement utilisateur correspondant audit terminal de télécommunications (41) dans lequel est inséré ledit élément de sécurité (40) sont stockés dans une plate-forme OTA (43, 44).

8. Système d'appairage d'un élément de sécurité (40) à un terminal de télécommunications (41) dans un réseau de télécommunications (42), ledit élément de sécurité (40) étant amovible dudit terminal de télécommunications (41), **caractérisé en ce qu'**il comprend :
- des moyens (45) pour transmettre dudit élément de sécurité (40) audit terminal de télécommunications (41) un identifiant dudit élément de sécurité (40) à l'occurrence d'un événement (46) ;
- des moyens (47) pour transmettre dudit terminal de télécommunications (41), via ledit réseau de télécommunications (42), ledit identifiant dudit élément de sécurité (40) et un identifiant de l'abonnement utilisateur correspondant audit terminal de télécommunications (41) dans lequel est inséré ledit élément de sécurité (40) à un élément (43) coopérant avec ledit réseau de télécommunications (42) ;
- des moyens pour associer dans un élément (44) coopérant avec ledit réseau de télécommunications (42), ledit identifiant dudit élément de sécurité (40) et ledit identifiant de l'abonnement utilisateur correspondant audit terminal de télécommunications (41) dans lequel ledit élément de sécurité (40) est inséré, afin que ledit élément (43) coopérant avec ledit réseau de télécommunications (42) puisse adresser ledit élément de sécurité (40) via ledit terminal de télécommunications (41).
